# EUROPEAN PATENT APPLICATION

(11) **EP 4 218 437 A1**
(43) Date of publication of application: **02.08.2023**
(21) Application number: 20954596.1
(22) Date of filing: 25.09.2020
(51) Int. Cl.: A24F 40/40, A24F 40/50, A24F 40/46

(54) **CHIP FOR ATOMIZER, ATOMIZER, AND ELECTRONIC ATOMIZATION DEVICE**

(71) Applicant: Shenzhen Smoore Technology Limited, Shenzhen, Guangdong 518102 (CN)
(72) Inventor: ZHAO, Bosong, Shenzhen, Guangdong 518102 (CN); DONG, Wenjie, Shenzhen, Guangdong 518102 (CN); ZHOU, Qingliang, Shenzhen, Guangdong 518102 (CN); FANG, Weiming, Shenzhen, Guangdong 518102 (CN)
(74) Representative: De Arpe Tejero, Manuel
(86) International application number: PCT/CN2020/117848
(87) International publication number: WO 2022/061744

(57) **Abstract**

A chip (1) for an atomizer, the atomizer, and an electronic atomization device. The chip (1) comprises a package body (12), wherein a communication interface (SDA) is provided on the packaging body (12), so as to determine, by means of the communication interface (SDA) when the atomizer is inserted in a battery rod, whether the battery rod can communicate with the atomizer; when the battery rod communicates with the atomizer, the atomizer works in a first mode; and when the battery rod does not communicate with the atomizer, the atomizer works in a second mode. Therefore, the requirements for use in different environments can be satisfied.

## Description

### TECHNICAL FIELD

The present disclosure relates to the field of electronic atomization devices, and in particular, to a chip configured for an atomizer, an atomizer, and an electronic atomization device.

### BACKGROUND

At present, a memory chip is configured in an atomizer of some electronic atomization devices with encryption functions, and a password in the memory chip is used for encryption and identification. Although this method realizes the identification of the atomizer by a battery rod in the electronic atomization device, the usage of this method is limited and is not able to meet the requirements of different customers for different atomizers.

### SUMMARY

### Technical Problems

The present disclosure provides a chip configured for an atomizer, an atomizer, and an electronic atomization device, to meet requirements for use in different circumstances.

### Technical Solutions

To resolve the foregoing technical problem, the first technical solution provided in the present disclosure is as follows. A chip configured for an atomizer is provided. The chip includes a package. The package is provided with a communication interface, when the atomizer is inserted into a battery rod, whether the battery rod communicates with the atomizer is determined through the communication interface. When the battery rod communicates with the atomizer, the atomizer operates in a first mode; and when the battery rod does not communicate with the atomizer, the atomizer operates in a second mode.

The chip further includes a control switch and a driving control circuit. The control switch is arranged in the package; and the driving control circuit is arranged in the package. The control end of the driving control circuit is connected to the control end of the control switch, and the communication end of the driving control circuit is connected to the communication interface, to determine whether the battery rod is able to communicate with the atomizer through the communication interface.

The package further includes a switch channel interface, a ground interface, and a power supply interface. The switch channel interface is connected to the first channel end of the control switch; the ground interface is connected to the second channel end of the control switch and the ground end of the driving control circuit; and the power supply interface is connected to the power supply end of the driving control circuit, and connected to the communication interface.

The package further includes a switch control interface and/or an expansion interface. The switch control interface is further connected to the control end of the control switch, and the expansion interface serves as a reserved interface of the chip.

The package further includes a diode. The diode is arranged in the package, and the communication interface is connected to the power supply interface through the diode.

The package further includes a resistor. The resistor is arranged in the package, and the communication interface is connected to the ground interface through the resistor.

The driving control circuit includes a memory storing preset data, when the atomizer is inserted into the battery rod and the battery rod does not communicate with the atomizer within a predetermined time interval, the driving control circuit controls the control switch according to the preset data, to enable the atomizer to operate in the second mode.

To resolve the foregoing technical problem, the second technical solution provided in the present disclosure is as follows. An atomizer is provided. The atomizer includes a heating element and a chip connected to the heating element. The chip is the chip abovementioned. After the atomizer is inserted into the battery rod, when the battery rod communicates with the atomizer, the chip controls the heating element to enable the atomizer to operate in the first mode, and when the battery rod does not communicate with the atomizer, the chip controls the heating element to enable the atomizer to operate in the second mode.

The atomizer further includes a first input end, a second input end and a capacitor. When the atomizer is inserted into the battery rod, the atomizer is electrically connected to the battery rod through the first input end and the second input end, the heating element and the control switch of the chip are connected in series between the first input end and the second input end, and the communication interface of the package is connected to the first input end. The power supply interface of the package is grounded through the capacitor.

The atomizer further includes a first switch. The control end of the first switch is connected to the switch control interface, the first channel end of the first switch is connected to the switch channel interface, and the second channel end of the first switch is connected to the ground interface, to enable that the first switch is connected in parallel to the control switch.

The atomizer further includes a second switch. The control end of the second switch is connected to the switch control interface, the first channel end of the second switch is connected to the ground interface, and the second channel end of the second switch is connected to the second input end, to enable that the heating element, the control switch, and the second switch are connected in series between the first input end and the second input end in sequence.

The atomizer further includes a first input end, a second input end and a capacitor. When the atomizer is inserted into the battery rod, the atomizer is electrically connected to the battery rod through the first input end and the second input end, an end of the heating element is connected to the first input end, the switch channel interface of the package is connected to the first input end, and another end of the heating element is connected to the ground interface of the package, to enable that the heating element and the control switch of the chip are respectively connected in parallel between the first input end and the second input end; and the communication interface of the package is connected to the first input end. The power supply interface of the package is grounded through the capacitor.

To resolve the foregoing technical problem, the third technical solution provided in the present disclosure is as follows. An electronic atomization device is provided. The electronic atomization device includes an atomizer and a battery rod. The atomizer is the atomizer abovementioned. The battery rod is configured to supply power to the atomizer.

### Beneficial Effects:

The beneficial effects of the present disclosure are different from those in the prior art. In the chip configured for an atomizer, the atomizer, and the electronic atomization device provided in the present disclosure, a package is arranged, and the package is provided with a communication interface, and when the atomizer is inserted into a battery rod, the communication interface is configured to determine whether the battery rod is able to communicate with the atomizer; when the battery rod communicates with the atomizer, the atomizer operates in a first mode; and when the battery rod does not communicate with the atomizer, the atomizer operates in a second mode. Therefore, the requirements for use of the atomizer in different circumstances may be met.

### BRIEF DESCRIPTION OF THE DRAWINGS

FIG. 1 is a schematic structural diagram of a first embodiment of a chip configured for an atomizer according to the present disclosure.
FIG. 2 is a schematic structural diagram of a second embodiment of a chip configured for an atomizer according to the present disclosure.
FIG. 3 is a schematic structural diagram of a first embodiment of an atomizer according to the present disclosure.
FIG. 4 is a schematic structural diagram of a second embodiment of an atomizer according to the present disclosure.
FIG. 5 is a schematic structural diagram of a third embodiment of an atomizer according to the present disclosure.
FIG. 6 is a schematic structural diagram of a fourth embodiment of an atomizer according to the present disclosure.
FIG. 7 is a schematic diagram of the functional modules of a battery rod according to the present disclosure.
FIG. 8 is a schematic diagram of the functional modules of an embodiment of FIG. 7.
FIG. 9 is a schematic diagram of a circuit structure of an embodiment of FIG. 8.
FIG. 10 is a schematic diagram of the functional modules of another embodiment of FIG. 7.
FIG. 11 is a schematic diagram of a circuit structure of an embodiment of FIG. 10.
FIG. 12 is a schematic structural diagram of an embodiment of an electronic atomization device formed by forwardly inserting the atomizer shown in FIG. 3 in the battery rod shown in FIG. 9.
FIG. 13 is a schematic structural diagram of an embodiment of an electronic atomization device formed by reversely inserting the atomizer shown in FIG. 3 in the battery rod shown in FIG. 9.
FIG. 14 is a schematic structural diagram of a fifth embodiment of an atomizer according to the present disclosure.
FIG. 15 is a schematic diagram of the functional modules of a second embodiment of the battery rod according to the present disclosure.
FIG. 16 is a schematic flowchart of a first embodiment of a method of using an electronic atomization device according to the present disclosure.
FIG. 17 is a schematic flowchart of a second embodiment of a method of using an electronic atomization device according to the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of the present disclosure without creative efforts shall fall within the protection scope of the present disclosure.

The following describes the present disclosure in detail with reference to the accompanying drawings and embodiments.

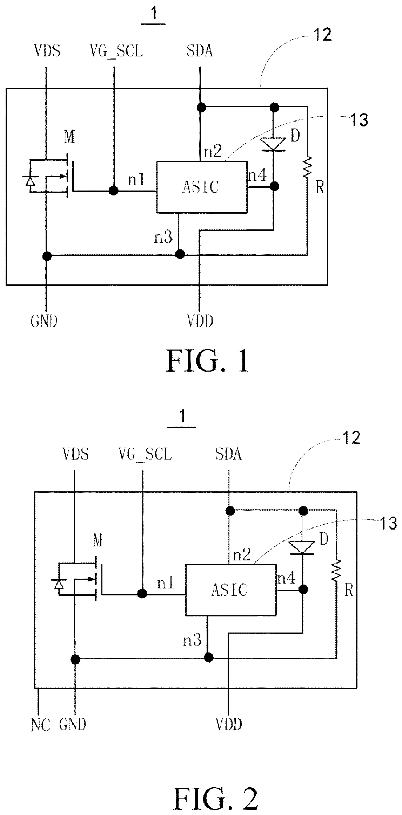

FIG. 1 is a schematic structural diagram of a first embodiment of a chip configured for an atomizer according to the present disclosure. A chip 1 includes a package 12, a communication interface SDA is provided on the package 12, and the communication interface SDA is configured to determine whether the battery rod is able to communicate with the atomizer when the atomizer is inserted intoto a battery rod. When the battery rod communicates with the atomizer, the atomizer operates in a first mode; and when the battery rod fails to communicate with the atomizer, the atomizer operates in a second mode.

The chip 1 includes a control switch M and a driving control circuit 13, and the control switch M and the driving control circuit 13 are both arranged in the package 12. The control end n1 of the driving control circuit 13 is connected to the control end of the control switch M, and the communication end n2 of the driving control circuit 13 is connected to the communication interface SDA, in order to determine whether the battery rod is able to communicate with the atomizer through the communication interface SDA.

The package 12 includes a switch channel interface VDS, a ground interface GND and a power supply interface VDD. The switch channel interface VDS is connected to the first channel end of the control switch M; the ground interface GND is connected to the second channel end of the control switch M and the ground end n3 of the driving control circuit 13; and the power supply interface VDD is connected to the power supply end n4 of the driving control circuit 13 and is connected to the communication interface SDA.

The package 12 includes a switch control interface VG_SCL, and the switch control interface VG_SCL is connected to the control end of the control switch M.

The chip 1 further includes a diode D, and the diode D is arranged in the package 12. The communication interface SDA is connected to the power supply interface VDD through the diode D. The diode D is a diode, the anode of the diode is connected to the communication interface SDA, and the cathode of the diode is connected to the power supply end n4 of the driving control circuit 13 and is connected to the power supply interface VDD. In an alternative embodiment, the diode D may also be a metal-oxide-semiconductor field effect transistor (MOSFET), a triode, and the like.

The chip 1 further includes a resistor R, and the resistor R is arranged in the package 12. The communication interface SDA is connected to the ground interface GND through the resistor R. A first end of the resistor R is connected to the communication interface SDA, and a second end of the resistor R is connected to the ground interface GND.

Optionally, the driving control circuit 13 further includes a memory, and preset data is stored in the memory. When the atomizer is inserted into the battery rod and the battery rod does not communicate with the atomizer within a preset time period, the driving control circuit 13 may control the control switch M according to the preset data or does not perform any operation, such that the atomizer operates in the second mode.

Optionally, the driving control circuit 13 is an application-specific integrated circuit (ASIC). The diode D may alternatively be integrated into the ASIC formed by the driving control circuit 13.

FIG. 2 is a schematic structural diagram of a first embodiment of a chip configured for an atomizer according to the present disclosure. Compared with the first embodiment shown in FIG. 1, the difference is that the chip 1 shown in the present embodiment further includes an expansion interface NC, and the expansion interface NC serves as a reserved interface of the chip 1. Optionally, the expansion interface NC is electrically connected to the ground interface GND in the package 12.

The chip 1 shown in FIG. 2 is packaged by using SOT23-6. The chip 1 shown in FIG. 1 is packaged by using SOT23-5, which may reduce costs to the greatest extent in terms of package. However, adopting the SOT23-6 package manner shown in FIG. 2 facilitates internal wiring of the chip 1. In the chips 1 shown in FIG. 1 and FIG. 2, the first channel end, the second channel end, and the control end (corresponding to a drain, a source, and a gate respectively) of the control switch M are independently led out. In an actual application, the problem of insufficient current may be resolved by introducing an additional switch connected in parallel with the control switch M, and the problem of reverse conduction of the control switch M may be prevented by introducing an additional switch connected in series with the control switch M.

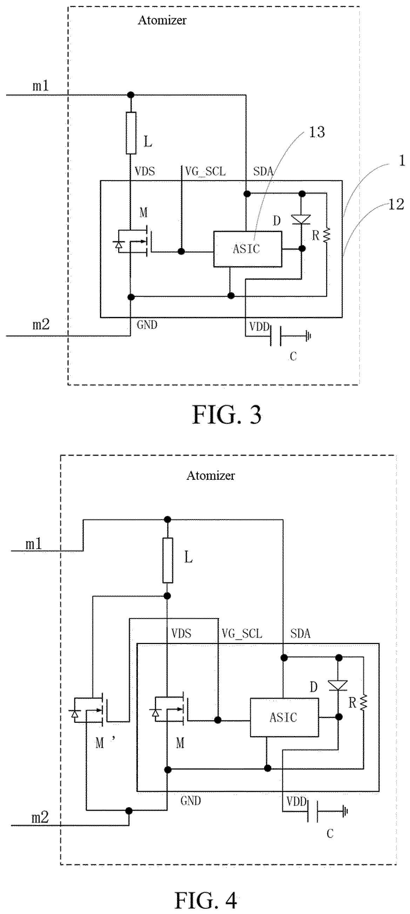

FIG. 3 is a schematic structural diagram of a first embodiment of an atomizer according to the present disclosure. The atomizer includes a heating element L and a chip 1. The chip 1 is connected to the heating element L, and the chip 1 is the chip 1 shown in any one of the embodiments in FIG. 1 and FIG. 2.

After the atomizer is inserted into a battery rod and the battery rod communicates with the atomizer, the chip 1 controls the heating element L to generate heat, such that the atomizer operates in a first mode; and when the battery rod fails to communicate with the atomizer, the chip 1 controls the heating element L to generate heat or to not generate heat, such that the atomizer operates in a second mode. In a specific embodiment, if the battery rod realizes communication with the atomizer, it indicates that the atomizer is able to match the battery rod, and the atomizer and the battery rod are products of a same model produced by a same manufacturer. In this case, the atomizer may be controlled to generate heat according to the model of the atomizer to operate in the first mode. If the battery rod fails to communicate with the atomizer, it indicates that the atomizer is not able to match the battery rod, and the atomizer and the battery rod are not products of a same model produced by a same manufacturer. In this case, a default parameter may be used for controlling the atomizer to generate heat or prohibiting the atomizer from generating heat to enable the atomizer to operate in the second mode.

The atomizer further includes a first input end m1 and a second input end m2. When the atomizer is inserted into the battery rod, the atomizer is electrically connected to the battery rod through the first input end m1 and the second input end m2. In the present embodiment, the heating element L and the control switch M of the chip 1 are connected in series between the first input end m1 and the second input end m2, and the communication interface SDA of the package 12 is connected to the first input end m1.

Optionally, the atomizer further includes a capacitor C, and the power supply interface VDD of the package 12 is grounded through the capacitor C.

A first end of the heating element L is connected to the first input end m1, and a second end of the heating element L is connected to the first channel end of the control switch M. A first end of the capacitor C is connected to the power supply interface VDD, and a second end of the capacitor C is grounded.

FIG. 4 is a schematic structural diagram of a second embodiment of an atomizer according to the present disclosure. Compared with the first embodiment of the atomizer shown in FIG. 3, a difference is that the present embodiment further includes a first switch M', and the first switch M' and the control switch M are connected in parallel. The control end of the first switch M' is connected to the switch control interface VG_SCL, the first channel end of the first switch M' is connected to the switch channel interface VDS and the first channel end of the control switch M, and the second channel end of the first switch M' is connected to the ground interface GND and the second channel end of the control switch.

In the present embodiment, the first switch M' and the control switch M are connected in parallel, such that a conduction current is increased. For example, if a current that flows through the heating element L is 10 A, while the control switch M is only able to withstand a maximum current of 6 A, after the chip 1 completes an authentication operation and the chip 1 turns on the control switch M and then the heating element L is activated to generate heat through a PWM signal, the control switch M is not able to withstand the 10 A current, resulting that an electronic atomization device is not able to atomize normally. In the present embodiment, since the expansion interface NC or the ground interface GND is reserved, the first switch M' is externally connected, and the control switch M in the chip 1 and the first switch M' are connected in parallel, such that the conduction current is increased.

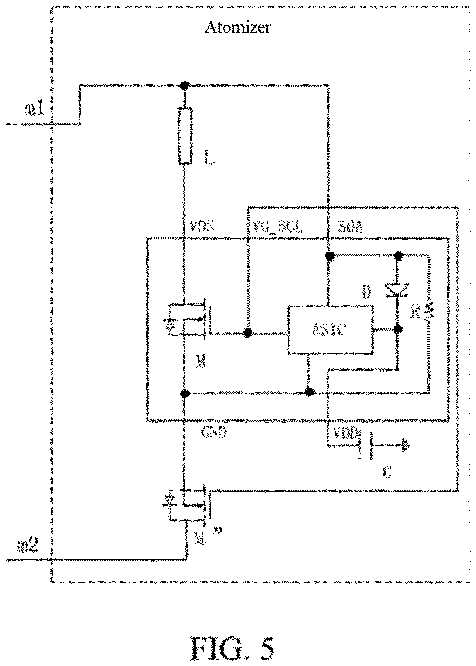

FIG. 5 is a schematic structural diagram of a third embodiment of an atomizer according to the present disclosure. Compared with the first embodiment of the atomizer shown in FIG. 3, a difference is that the present embodiment further includes a second switch M", and the second switch M" and the control switch M are connected in series. The control end of the second switch M" is connected to the switch control interface VG_SCL, the first channel end of the second switch M" is connected to the ground interface GND and the second channel end of the control switch M, and the second channel end of the second switch M" is connected to the second input end m2. In the present embodiment, the heating element L, the control switch M, and the second switch M" are connected in series between the first input end m1 and the second input end m2 in sequence.

In the present embodiment, when only the control switch M is included in the chip 1 and when the atomizer is reversely inserted into the battery rod, the heating element L is grounded. When the second channel end (the source) of the control switch M is connected to the power supply voltage VDD, the power supply voltage VDD forms a channel through a body diode of the control switch M, thus a reverse conduction is achieved. When only the second switch M" is included in the chip 1, and when the atomizer is reversely inserted into the battery rod, a body diode of the second switch M" is in a turn-off state, which may prevent the atomizer from being damaged due to the reverse conduction of the atomizer. Therefore, the heating element L, the control switch M, and the second switch M" are connected in series between the first input end m1 and the second input end m2 in sequence, which may prevent the reverse conduction problem of the control switch M.

Operating modes of the atomizers of the second embodiment and the third embodiment are similar to the operating mode of the atomizer of the first embodiment. For the purpose of brevity, details are not described herein again.

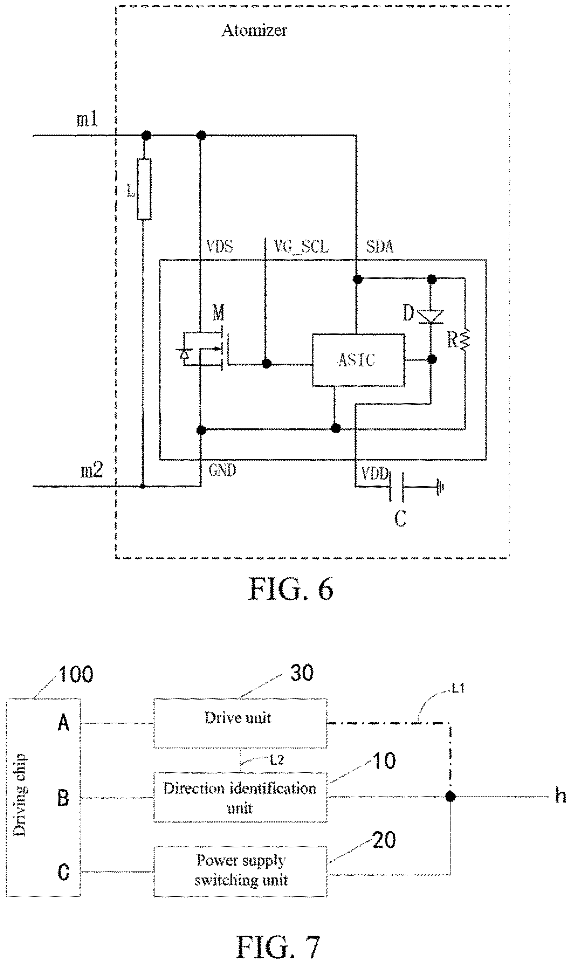

FIG. 6 is a schematic structural diagram of a fourth embodiment of an atomizer according to the present disclosure. In the present embodiment, the heating element L and the control switch M are connected in parallel between the first input end m1 and the second input end m2. One end of the heating element L is connected to the first input end m1, the switch channel interface VDS of the package 12 is connected to the first input end m1, and the other end of the heating element L is connected to the ground interface GND of the package 12. In the present embodiment, the communication interface SDA of the package 12 is connected to the first input end m1, and the capacitor C is connected to the power supply interface VDD of the package 12 and is grounded. The first end of the capacitor C is connected to the power supply interface VDD, and the second end of the capacitor C is grounded. The first channel end of the control switch M is connected to the first input end m1, the second channel end of the control switch M is connected to the second input end m2, and the control end of the control switch M is connected to the control end n1 of a driving control circuit 13.

In the present embodiment, when the battery rod successfully communicates with the atomizer, the battery rod may heat the heating element L according to a heating parameter stored in the atomizer to enable the atomizer to operate in the first mode. In the present embodiment, the heating element L and the control switch M are connected in parallel, when the battery rod fails to communicate with the atomizer, as long as the battery rod sends a PWM signal, the heating element may still generate heat to allow the atomizer to operate in the second mode. In the present embodiment, the heating element L and the control switch M are connected in parallel, and the battery rod may determine whether the battery rod and the atomizer are products produced by a same manufacturer by determining whether the communication between the battery rod and the vaporizer is successful, so as to achieve the identification of the atomizer. However, the function of prohibiting the use of the atomizer when the battery rod and the atomizer do not match may not be realized.

The chip provided for the atomizer according to the present disclosure may achieve a series connection between the heating element and the control switch, or achieve a parallel connection between the heating element and the control switch, and may implement different functions according to different software settings, so as to meet different usage requirements of the atomizer in different usage circumstances.

FIG. 7 is a schematic diagram of functional modules of a battery rod according to the present disclosure. The battery rod is configured to drive an atomizer inserted therein and supply power to the atomizer.

The battery rod includes a driving chip 100 and a driving identification circuit 200, and the driving identification circuit 200 is connected to the driving chip 100. When the atomizer is inserted into the battery rod, the driving chip 100 determines that the atomizer is forwardly inserted or reversely inserted through the driving identification circuit 200 and the driving chip 100 controls the driving identification circuit 200 to operate in a forward insertion mode or a reverse insertion mode.

The driving identification circuit 200 includes a direction identification unit 10, a driving unit 30 and a power supply switching unit 20; and the driving chip 100 includes a detection communication port B, a driving port A and a switching port C. The direction identification unit 10 is connected to the detection communication port B, the driving unit 30 is connected to the driving port A, and the power supply switching unit 20 is connected to the switching port C. The direction identification unit 10 and the power supply switching unit 20 are electrically connected to a connection pin h respectively; and the driving unit 30 is electrically connected to the connection pin h directly (the dash-dot line L1 shown in FIG. 7) or the driving unit 30 is electrically connected to the connection pin h through the power supply switching unit 20 (the dashed line L2 shown in FIG. 7).

The driving chip 100 determines whether the atomizer is forwardly inserted or reversely inserted through the detection communication port B and the direction identification unit 10, and controls the power supply switching unit 20 to switch through the switching port C, such that the driving identification circuit 200 is driven to operate in the forward insertion mode or the reverse insertion mode.

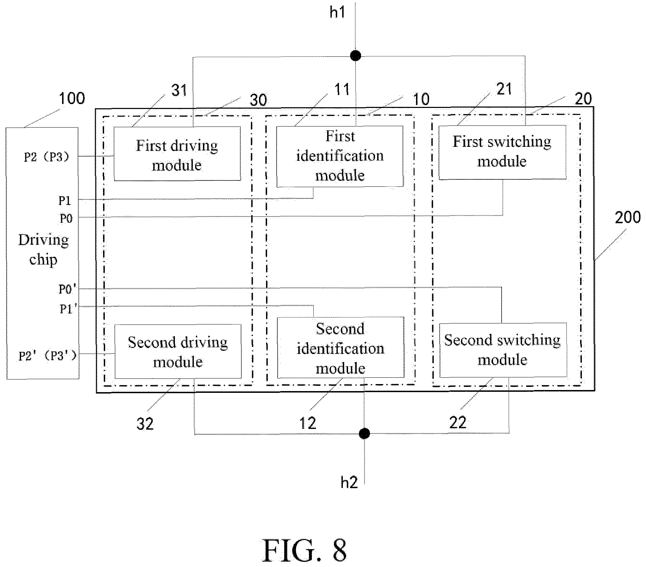

Specifically, as illustrated in FIG. 8, which is a schematic diagram of functional modules of a specific embodiment of FIG. 7. The detection communication port B includes a first detection communication port P1 and a second detection communication port P1'. The direction identification unit 10 includes a first identification module 11 and a second identification module 12. The first identification module 11 is connected to the first detection communication port P1, and the second identification module 12 is connected to the second detection communication port P1'. In an embodiment, when it is determined that the first detection communication port P1 is able to communicate with the atomizer, the atomizer inserted into the battery rod is determined as being forwardly inserted; and when it is determined that the second detection communication port P1' is able to communicate with the atomizer, the atomizer inserted into the battery rod is determined as being reversely inserted. When the atomizer is inserted into the battery rod, both the first detection communication port P1 and the second detection communication port P1' of the battery rod send a string of data to the atomizer. When the first detection communication port P1 detects a feedback signal, it indicates that the atomizer inserted into the battery rod is forwardly inserted. When the second detection communication port P1' detects the feedback signal, it indicates that the atomizer inserted into the battery rod is reversely inserted.

The connection pin h further includes a first connection pin h1 and a second connection pin h2. The first connection pin h1 and the second connection pin h2 are configured to be electrically connected to the atomizer inserted into the battery rod. The atomizer shown in the foregoing embodiment is taken as an example in the following description. When the atomizer inserted into the battery rod is forwardly inserted, the driving identification circuit 200 operates in the forward insertion mode, such that the first connection pin h1 serves as a power supply connection pin, and the second connection pin h2 serves as a ground voltage connection pin. In this case, the atomizer is inserted into the battery rod, the first connection pin h1 is connected to the first input end m1, and the second connection pin h2 is connected to the second input end m2.

When the atomizer inserted into the battery rod is reversely inserted, the driving identification circuit 200 operates in the reverse insertion mode, such that the first connection pin h1 serves as the ground voltage connection pin, and the second connection pin h2 serves as the power supply connection pin. In this case, the atomizer is inserted into the battery rod, the first connection pin h1 is connected to the second input end m2, and the second connection pin h2 is connected to the first input end m1.

In another embodiment, the detection communication port B includes a first detection communication port P1 and a second detection communication port P1'. When it is determined that a resistance value collected by the first detection communication port P1 is in a first preset range, and a resistance value collected by the second detection communication port P1' is in a second preset range, the atomizer inserted into the battery rod is determined as being forwardly inserted. When it is determined that the resistance value collected by the first detection communication port P1 is in the second preset range, and the resistance value collected by the second detection communication port P1' is in the first preset range, the atomizer inserted intoto the battery rod is determined as being reversely inserted.

As shown in FIG. 8, in the present embodiment, the driving port A includes a first group driving port P2 (P3) and a second group driving port P2' (P3'). The driving unit 30 includes a first driving module 31 and a second driving module 32. The first driving module 31 is connected to the first group driving port P2 (P3), and the second driving module 32 is connected to the second group driving port P2' (P3').

The power supply switching unit 20 includes a first switching module 21 and a second switching module 22. The switching port C includes a first switching port P0 and a second switching port P0'. The first switching module 21 is connected to the first switching port P0, the first driving module 31, and the first connection pin h1. The second switching module 22 is connected to the second switching port P0', the second driving module 32, and the second connection pin h2.

When the atomizer inserted into the battery rod is forwardly inserted, the first switching port P0 and the second switching port P0' switch the first switching module 21 to a non-operating mode and the second switching module 22 to an operating mode, such that the first connection pin h1 is connected to the first driving module 31, and the second connection pin h2 is connected to the ground voltage. When the atomizer inserted into the battery rod is reversely inserted, the first switching port P0 and the second switching port P0' switch the first switching module 21 to the operating mode and the second switching module 22 to the non-operating mode, such that the first connection pin h1 is connected to the ground voltage, and the second connection pin h2 is connected to the second driving module 32.

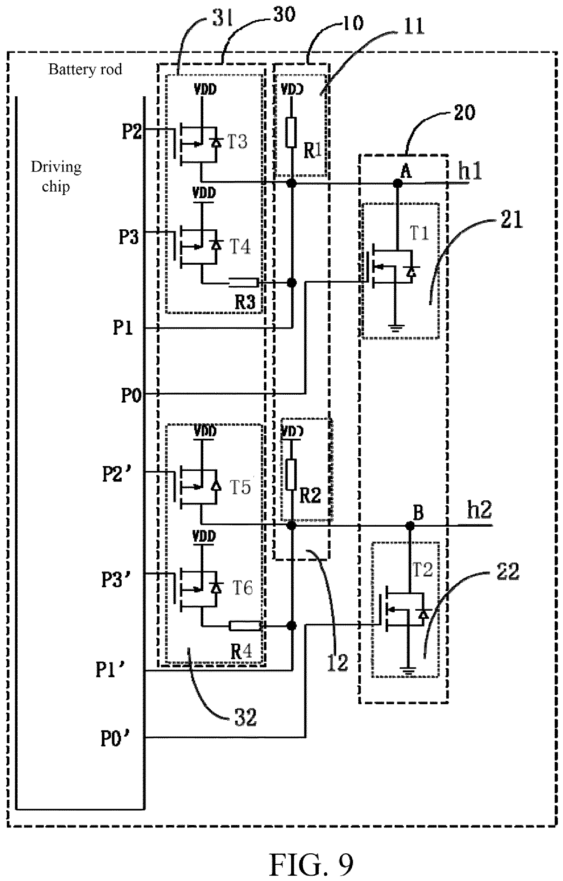

FIG. 9 is a schematic diagram of a specific structure of the functional modules shown in FIG. 8. The first identification module 11 includes a first resistor R1, a first end of the first resistor R1 is connected to the power supply voltage VDD, and a second end of the first resistor R1 is connected to the first detection communication port P1 and the first connection pin h1. The second identification module 12 includes a second resistor R2, a first end of the second resistor R2 is connected to the power supply voltage VDD, and a second end of the second resistor R2 is connected to the second detection communication port P1' and the second connection pin h2.

The first switching module 21 includes a first switch T1. The first channel end of the first switch T1 is connected to the first connection pin h1, the second channel end of the first switch T1 is connected to the ground voltage, and the control end of the first switch T1 is connected to the first switching port P0. The second switching module 22 includes a second switch T2. The first channel end of the second switch T2 is connected to the second connection pin h2, the second channel end of the second switch T2 is connected to the ground voltage, and the control end of the second switch T2 is connected to the second switching port P0'. When the atomizer inserted into the battery rod is forwardly inserted, the first switching port P0 controls the first switch T1 to be turned off, and the second switching port P0' controls the second switch T2 to be turned on such that the second connection pin h2 is connected to the ground voltage. When the atomizer inserted into the battery rod is reversely inserted, the first switching port P0 controls the first switch T1 to be turned on such that the first connection pin h1 is connected to the ground voltage, and the second switching port P0' controls the second switch T2 to be turned off.

The first group driving port P2 (P3) includes a first positive driving port P2 and a second positive driving port P3. The first driving module 31 includes a third switch T3, a fourth switch T4 and a third resistor R3. The first channel end of the third switch T3 is connected to the power supply voltage VDD, the second channel end of the third switch T3 is connected to the first connection pin h1, and the control end of the third switch T3 is connected to the first positive driving port P2. The first channel end of the fourth switch T4 is connected to the power supply voltage VDD, and the control end of the fourth switch T4 is connected to the second positive driving port P3. A first end of the third resistor R3 is connected to the second channel end of the fourth switch T4, and a second end of the third resistor R3 is connected to the first detection communication port P1 and the first connection pin h1.

The second group driving port P2' (P3') includes a first negative driving port P2' and a second negative driving port P3'. The second driving module 32 includes a fifth switch T5, a sixth switch T6 and a fourth resistor R4. The first channel end of the fifth switch T5 is connected to the power supply voltage VDD, the second channel end of the fifth switch T5 is connected to the second connection pin h2, and the control end of the fifth switch T5 is connected to the first negative driving port P2'. The first channel end of the sixth switch T6 is connected to the power supply voltage VDD, and the control end of the sixth switch T6 is connected to the second negative driving port P3'. A first end of the fourth resistor R4 is connected to the second channel end of the sixth switch T6, and a second end of the fourth resistor R4 is connected to the second detection communication port P1' and the second connection pin h2.

When the direction identification circuit 10 identifies that the atomizer is forwardly inserted into the battery rod, the third switch T3 and the fourth switch T4 are controlled to be turned on through the first positive driving port P2 and the second positive driving port P3, thereby heating the heating element L. When the direction identification circuit 10 identifies that the atomizer is reversely inserted into the battery rod, the fifth switch T5 and the sixth switch T6 are controlled to be turned on through the first negative driving port P2' and the second negative driving port P3', thereby heating the heating element L.

The battery rod shown in the present embodiment is able to identify whether the inserted atomizer is forwardly inserted or reversely inserted, and select a corresponding driving manner to drive the atomizer according to an identification result, therefore in any case whether the atomizer is forwardly inserted or reversely inserted into the battery rod, the atomizer may be driven by the battery rod to operate.

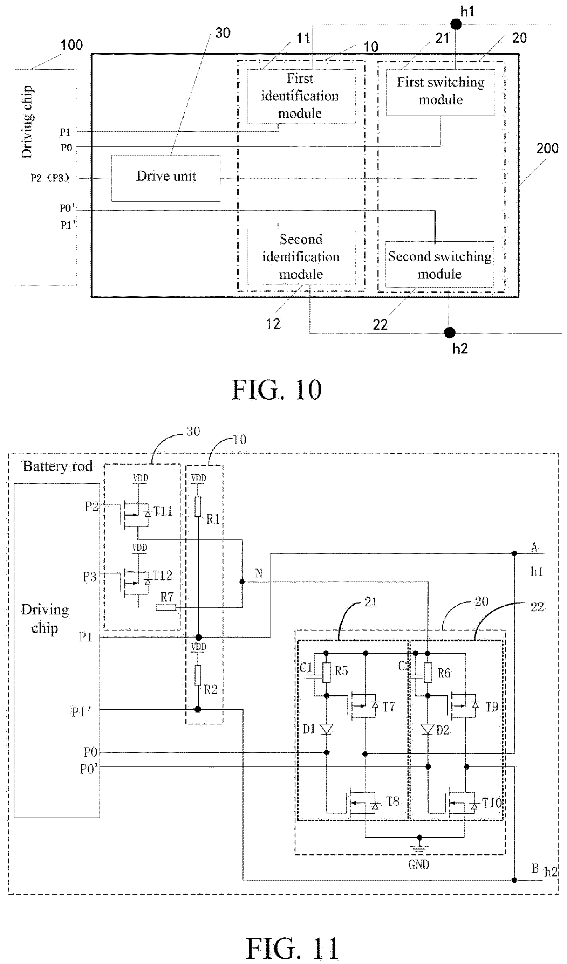

FIG. 10 is a schematic diagram of functional modules of another embodiment of FIG. 7. In the present embodiment, the driving unit 30 only includes one driving module. Specifically, as shown in FIG. 11, which is a specific schematic diagram of a specific structure of the function modules shown in FIG. 10. In the present embodiment, the direction identification circuit 10 is the same as the direction identification circuit 10 in the battery rod shown in FIG. 9, and details are not described herein again. A difference between the direction identification circuit 10 in the present embodiment and the direction identification circuit in the battery rod shown in FIG. 9 is as follows.

When the atomizer inserted into the battery rod is forwardly inserted, the first switching port P0 and the second switching port P0' switch the power supply switching unit 20 to operate in the first mode, such that the first connection pin h1 is connected to an output end N of the driving unit 30, and the second connection pin h2 is connected to the ground voltage GND.

When the atomizer inserted into the battery rod is reversely inserted, the first switching port P0 and the second switching port P0' switch the power supply switching unit 20 to operate in the second mode, such that the first connection pin h1 is connected to the ground voltage GND, and the second connection pin h2 is connected to the output end N of the driving unit 30.

In the present embodiment, the power supply switching unit 20 includes a first switching module 21 and a second switching module 22. The first switching module 21 is connected to the first switching port P0 and the first connection pin h1, and the first switching module 21 is configured to be connected to the ground voltage GND, and the second switching module 22 is connected to the second switching port P0' and the second connection pin h2, and the second switching module 22 is configured to be connected to the ground voltage GND. When the atomizer inserted into the battery rod is forwardly inserted, the first switching port P0 switches the first switching module 31 to be connected to the output end N of the driving unit 30, and the second switching port P0' switches the second switching module 22 to be connected to the ground voltage GND. When the atomizer inserted into the battery rod is reversely inserted, the first switching port P0 switches the first switching module 31 to be connected to the ground voltage GND, and the second switching port P0' switches the second switching module 22 to be connected to the output end N of the driving unit.

Specifically, as shown in FIG. 11, the first switching module 21 includes a fifth resistor R5, a first capacitor C1, a first diode D1, a seventh switch T7, and an eighth switch T8. A first end of the fifth resistor R5 is connected to the output end N of the driving unit. A first end of the first capacitor C1 is connected to the output end N of the driving unit, and a second end of the first capacitor C1 is connected to a second end of the fifth resistor R5. A first end of the first diode D1 is connected to the second end of the fifth resistor R5, and a second end of the first diode D1 is connected to the first switching port P0. The first channel end of the seventh switch T7 is connected to the output end N of the driving unit, the second channel end of the seventh switch T7 is connected to the first connection pin h1, and the control end of the seventh switch T7 is connected to the second end of the fifth resistor R5. The first channel end of the eighth switch T8 is connected to the first connection pin h1, the second channel end of the eighth switch T8 is connected to the ground voltage GND, and the control end of the eighth switch T8 is connected to the first switching port P0.

The second switching module 22 includes: a sixth resistor R6, a second capacitor C2, a second diode D2, a ninth switch T9, and a tenth switch T10. A first end of the sixth resistor R6 is connected to the output end N of the driving unit. A first end of the second capacitor C2 is connected to the output end N of the driving unit, and a second end of the second capacitor C2 is connected to a second end of the sixth resistor R6. A first end of the second diode D2 is connected to the second end of the sixth resistor R6, and a second end of the second diode D2 is connected to the second switching port P0'. The first channel end of the ninth switch T9 is connected to the output end N of the driving unit, the second channel end of the ninth switch T9 is connected to the second connection pin h2, and the control end of the ninth switch T9 is connected to the second end of the sixth resistor R6. The first channel end of the tenth switch T10 is connected to the second connection pin h2, the second channel end of the tenth switch T10 is connected to the ground voltage GND, and the control end of the tenth switch T10 is connected to the second switching port P0'.

In the present embodiment, the driving port A includes a first driving port P2 and a second driving port P3. The driving unit 30 includes an eleventh switch T11, a twelfth switch T12, and a seventh resistor R7. The first channel end of the eleventh switch T11 is connected to the power supply voltage VDD, the second channel end of the eleventh switch T11 is connected to the output end N of the driving unit, and the control end of the eleventh switch T11 is connected to the first driving port P2. The first channel end of the twelfth switch T12 is connected to the power supply voltage VDD, and the control end of the twelfth switch T12 is connected to the second driving port P3. A first end of the seventh resistor R7 is connected to the second channel end of the twelfth switch T12, and a second end of the seventh resistor is connected to the output end N of the driving unit.

The direction identification circuit 10 shown in the present embodiment is the same as the direction identification circuit 10 in the battery rod shown in FIG. 9, and details are not described herein again.

When the direction identification circuit 10 identifies that the atomizer is forwardly inserted into the battery rod, the first switching port P0 outputs a low-level signal, such that the seventh switch M7 is turned on, and the first connection pin h1 is connected to the output end N of the driving circuit; and the second switching port P0' outputs a high-level signal, such that the tenth switch T10 is turned on, the point B is grounded, and the second connection pin h2 is grounded.

When the direction identification circuit 10 identifies that the atomizer is reversely inserted into the battery rod, the first switching port P0 outputs a high-level signal, such that the ninth switch M9 is turned on, and the second connection pin h2 is connected to the output end N of the driving circuit; and the second switching port P0' outputs a low-level signal, such that the eighth switch T8 is turned on, the point A is grounded, and the first connection pin h1 is grounded.

In the present embodiment, the first capacitor C1, the first diode D1, the fifth resistor R5 of the first switching module 21 and the second capacitor C2, the second diode D2, and the sixth resistor R6 of the second switching module 22 are able to ensure that the corresponding seventh switch T7 and the ninth switch T9 may be quickly turned on when the eleventh switch T11 is turned on, and are able to ensure that the corresponding seventh switch T7 and the ninth switch T9 may continue to be in a turn-on state when the eleventh switch T11 is turned off.

When the atomizer is forwardly inserted into the battery rod, the eleventh switch T11 outputs a PWM signal to supply power to the heating element L, and the first driving port P2 is at a low level, the eleventh switch T11 is turned on (equivalent to a high-level state of the PWM signal) to supply power to a source of the seventh switch T7 and a source of the ninth switch T9. In this case, since the eighth switch T8 is turned off, a gate of the seventh switch T7 is clamped to the low level by the first diode D1 and the first switching port P0, thereby turning on the seventh switch T7. The first capacitor C1 is charged to a voltage difference ΔV between the gate and the source of the seventh switch T7, such that a current is input to the first input end m1 of the atomizer through the seventh switch T7. In other words, the output end N of the driving circuit is input to the first input end m1 of the atomizer. When the first driving port P2 is at a high level, the eleventh switch T11 is turned off (equivalent to a low level state of the PWM signal), and the source of the seventh switch T7 is pulled down to a low voltage by the heating element L. However, since the first capacitor C1 only has a discharging channel through the fifth resistor R5, a power failure on two ends of the first capacitor C1 does not occur quickly, such that the seventh switch T7 may be turned on continuously. In other words, the output end N of the driving circuit is input to the first input end m1 of the atomizer, so as to ensure that the twelfth switch T12 and a channel of the seventh resistor R7 may collect a parameter of the heating element L.

When the atomizer is reversely inserted into the battery rod, the eleventh switch T11 outputs a PWM signal to supply power to the heating element L, and the first driving port P2 is at a low level, the eleventh switch T11 is turned on (equivalent to a high-level state of the PWM signal) to supply power to a source of the seventh switch T7 and a source of the ninth switch T9. In this case, since the tenth switch T10 is turned off, a gate of the ninth switch T9 is clamped to the low level by the second diode D2 and the second switching port P0', thereby turning on the ninth switch T9. The second capacitor C2 is charged to a voltage difference ΔV between the gate and the source of the ninth switch T9, such that a current is input to the second input end m2 of the atomizer through the ninth switch T9. In other words, the output end N of the driving circuit is input to the second input end m2 of the atomizer. When the first driving port P2 is at a high level, the eleventh switch T11 is turned off (equivalent to a low-level state of the PWM signal), and the source of the ninth switch T9 is pulled down to a low voltage by the heating element L. However, since the second capacitor C2 only has a discharging channel through the sixth resistor R6, power failure on two ends of the second capacitor C2 does not occur quickly, such that the ninth switch T9 may be turned on continuously. In other words, the output end N of the driving circuit is input to the second input end m2 of the atomizer, thereby ensuring that the twelfth switch T12 and a channel of the seventh resistor R7 may collect a parameter of the heating element L.

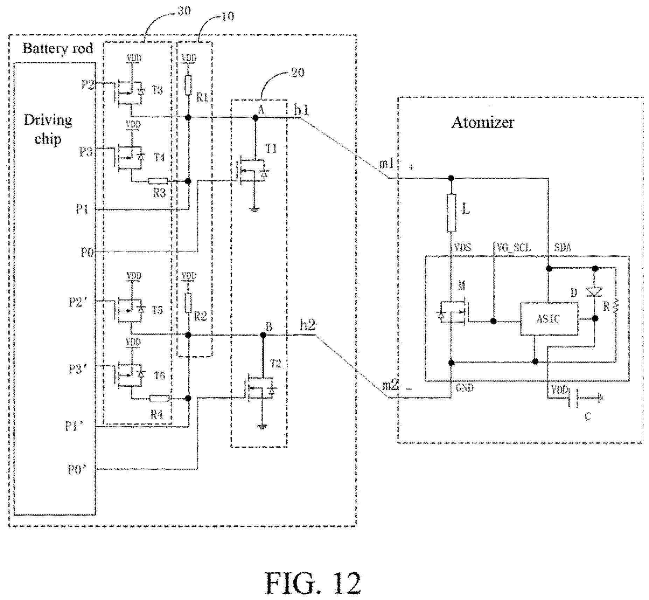

FIG. 12 is a schematic structural diagram of the atomizer shown in FIG. 3 being forwardly inserted into the battery rod shown in FIG. 9.

The second switch T2 is set to be turned on. When the atomizer is inserted into the battery rod, the first resistor R1 of the battery rod and the resistor R of the atomizer divide the power supply voltage VDD, and the first detection communication port P1 detects a jump signal and further wakes up a driving chip MCU of the battery rod. In this case, the first detection communication port P1 and the second detection communication port P1' of the driving chip 100 of the battery rod respectively send a series of data to the atomizer through the first connection pin h1 and the second connection pin h2. When the first detection communication port P1 detects a feedback signal, it indicates that the atomizer is forwardly inserted into the battery rod; and when the second detection communication port P1' detects a feedback signal, it indicates that the atomizer is reversely inserted into the battery rod.

In another embodiment, when it is determined that a resistance value collected by the first detection communication port P1 is in a first preset range, and a resistance value collected by the second detection communication port P1' is in a second preset range, the atomizer inserted into the battery rod is determined as being forwardly inserted. Otherwise, the atomizer is determined as being reversely inserted. In other words, when the resistance value collected by the first detection communication port P1 is an internal resistance of the driving control circuit 13 (for example, greater than 3 kQ), and the resistance value collected by the second detection communication port P1' is a resistance value of the heating element L (for example, less than 3 Ω), it indicates that the atomizer is forwardly inserted into the battery rod. When the resistance value collected by the first detection communication port P1 is the resistance value of the heating element L (for example, less than 3 Ω), and the resistance value collected by the second detection communication port P1' is the internal resistance of the driving control circuit 13 (for example, greater than 3 kΩ), it indicates that the atomizer is reversely inserted into the battery rod.

In the present embodiment, the atomizer being forwardly inserted into the battery rod is taken as an example in the following description. The first connection pin h1 of the battery rod is connected to the first input end m1 of the atomizer, and the second connection pin h2 of the battery rod is connected to the second input end m2 of the atomizer. In addition, in the present embodiment, the first switching port P0 controls the first switch T1 to be turned off, and the second switching port P0' controls the second switch T2 to be turned off, such that the point B is connected to the ground voltage. In this case, the battery rod provides the power supply voltage VDD to the first input end m1 of the atomizer through the first driving module 31, and further heats the heating element L.

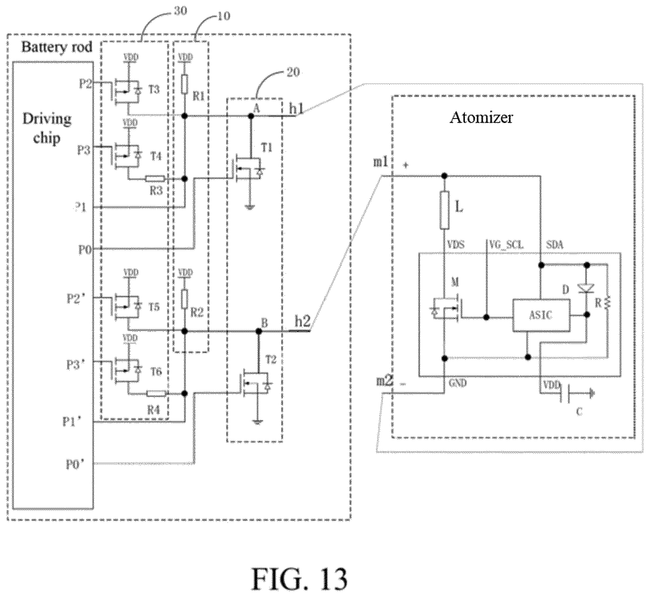

FIG. 13 is a schematic structural diagram of the atomizer shown in FIG. 3 being reversely inserted into the battery rod shown in FIG. 9.

The first switch T1 is set to be turned on. When the atomizer is inserted into the battery rod, the second resistor R2 of the battery rod and the resistor R of the atomizer divide the power supply voltage VDD, and the second detection communication port P1' detects a jump signal and further wakes up the driving chip MCU of the battery rod. In this case, the first detection communication port P1 and the second detection communication port P1' of the driving chip 100 of the battery rod respectively send a series of data to the atomizer through the first connection pin h1 and the second connection pin h2. When the first detection communication port P1 detects a feedback signal, it indicates that the atomizer is forwardly inserted into the battery rod; and when the second detection communication port P1' detects a feedback signal, it indicates that the atomizer is reversely inserted into the battery rod.

In another embodiment, when it is determined that the resistance value collected by the first detection communication port P1 is in the first preset range, and the resistance value collected by the second detection communication port P1' is in the second preset range, the atomizer inserted into the battery rod is determined as being forwardly inserted. Otherwise, the atomizer is determined as being reversely inserted. In other words, when the resistance value collected by the first detection communication port P1 is the internal resistance of the driving control circuit 13 (for example, greater than 3 kΩ), and the resistance value collected by the second detection communication port P1' is the resistance value of the heating element L (for example, less than 3 Ω), it indicates that the atomizer is forwardly inserted into the battery rod. When the resistance value collected by the first detection communication port P1 is the resistance value of the heating element L (for example, less than 3 Ω), and the resistance value collected by the second detection communication port P1' is the internal resistance of the driving control circuit 13 (for example, greater than 3 kΩ), it indicates that the atomizer is reversely inserted into the battery rod.

In the present embodiment, the atomizer being forwardly inserted into the battery rod is taken as an example in the following description. The first connection pin h1 of the battery rod is connected to the second input end m2 of the atomizer, and the second connection pin h2 of the battery rod is connected to the first input end m1 of the atomizer. In addition, in the present embodiment, the first switching port P0 controls the first switch T1 to be turned on, and the second switching port P0' controls the second switch T2 to be turned off, such that the point A is connected to the ground voltage. In this case, the battery rod provides the power supply voltage VDD to the first input end m1 of the atomizer through the second driving module 32, and then heats the heating element L.

For a specific operating principle of the atomizer shown in FIG. 3 being forwardly inserted or reversely inserted into the battery rod shown in FIG. 11, reference may be made to the foregoing descriptions, and details are not described herein again.

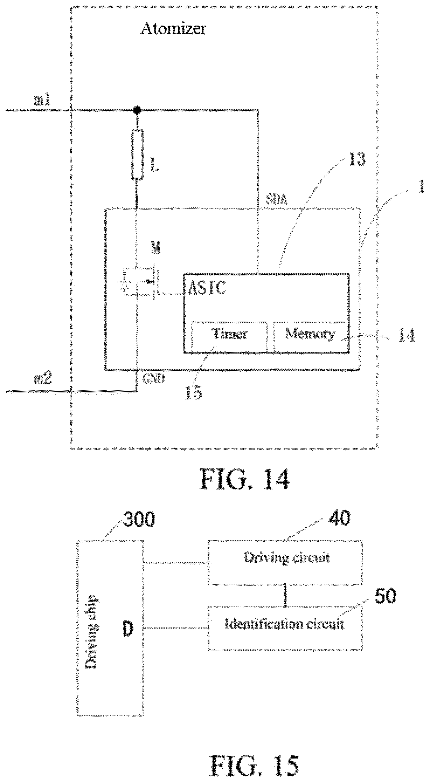

FIG. 14 is a schematic structural diagram of a fifth embodiment of an atomizer according to the present disclosure. Compared with the atomizer shown in FIG. 3, a memory 14 is further arranged in the chip 1. The memory 14 is arranged in the driving control circuit 13. It should be noted that, for simplicity, the technical features shown in FIG. 3 are not fully shown in FIG. 14, and for the technical features not shown, reference may be directly made to the description for FIG. 3.

A scrap parameter is stored in the memory 14. The scrap parameter is used for identifying whether the atomizer is able to be used. Specifically, if the scrap parameter stored in memory 14 is valid, it indicates that the atomizer is not able to be used; and if the scrap parameter stored in the memory 14 is invalid, it indicates that the atomizer is able to be used.

The communication interface SDA of the chip 1 communicates with the battery rod. When the atomizer is inserted into the battery rod, the atomizer authenticates with the battery rod through the communication interface SDA. When the authentication is successful, the battery rod reads the scrap parameter stored in the memory 14 to determine whether the atomizer is able to be used.

When the atomizer is inserted into the battery rod, the battery rod transmits data to the communication interface SDA of the atomizer, and if the feedback data from the atomizer is received, the authentication is successful. In this case, the battery rod reads the scrap parameter stored in the memory 14 of the atomizer through the communication interface SDA.

When the scrap parameter is in the valid state, the driving control circuit 13 controls the control switch M to be in an abnormal mode, thereby the atomizer is not able to be used normally. The driving control circuit 13 controls the control switch M to be disconnected. In this case, the battery rod is not able to heat the heating element L, and the atomizer is not able to be used normally.

When the scrap parameter is in the invalid state, the driving control circuit 13 controls the control switch M to be in the normal mode, thereby the atomizer may be used normally. Specifically, the driving control circuit 13 controls the control switch M to be turned on. In this case, the battery rod heats the heating element L, and the atomizer may be used normally.

In an embodiment, the memory 14 includes a data protection area and a data read/write area, and the data read/write area stores a current inhalation parameter and the scrap parameter. The data protection area stores a default inhalation parameter and a default heating parameter. The default inhalation parameter, for example, may be the longest inhalation time or the maximum number of inhalations after oil injection of the atomizer. The default heating parameter, for example, may be a corresponding heating power or a heating temperature curve. The current inhalation parameter, for example, may be the current inhalation time or the current number of inhalations of the atomizer.

The atomizer is able to be used when the scrap parameter is in the invalid state. The default heating parameter is obtained by the battery rod, and the battery rod heats the heating element L according to the default heating parameter, thus the atomizer is able to be used normally. When the battery rod heats the heating element L, the driving chip may control to output a corresponding heating power such that the heating element L may reach a predetermined temperature curve, and to prevent overheating of the atomization substrate.

In an embodiment, the driving control circuit 13 further includes a timer 15. When the atomizer is being used normally, the driving control circuit 13 is controlled to turn off the control switch M at a predetermined time interval. Specifically, after the driving control circuit 13 controls the control switch M to be turned on, the control switch M is regularly controlled to be turned off every predetermined time interval of the timer. Alternatively, in another embodiment, a predetermined code is written in the driving control circuit 13, and the predetermined code is able to control the driving control circuit 13 to control the control switch M to be turned off every predetermined time interval.

In an embodiment, when it is detected that inhalation is stopped in the atomizer, the scrap parameter and the current inhalation parameter of the atomizer are updated. If the updated current inhalation parameter reaches the default inhalation parameter, the scrap parameter in the atomizer is updated to the valid state.

A microphone or an airflow sensor is arranged in the battery rod. When the microphone or the airflow sensor detects a passing of an airflow, the battery rod is awakened from a sleep state and transmits a conduction signal to the atomizer. After the atomizer receives a conduction instruction, the driving control circuit 13 controls the control switch M to be turned on, and then the battery rod obtains the default heating parameter to heat the heating element L, such that the atomizer is able to be used normally. In this way, different atomization substrates may be atomized with different heating parameters to improve user experience. When the microphone or the airflow sensor detects stopping of the airflow, that is, when the inhalation is stopped, the battery rod stops heating the heating element L, and updates the current inhalation parameter in the atomizer according to the inhalation time or the number of inhalations during the inhalation process. For example, when it is detected that the user stops sucking the electronic atomization device, the battery rod accumulates the finished inhalation time and the inhalation time in the current inhalation parameter or the number of finished inhalations and the number of inhalations in the current inhalation parameter, and the current inhalation parameter is updated according to the accumulated result.

Optionally, after updating the current inhalation parameter, the updated current inhalation parameter is compared with the default inhalation time, and when the updated current inhalation parameter reaches the default inhalation parameter, it indicates that the inhalation time or the number of inhalations of the atomizer has been used up. In this case, the scrap parameter in the atomizer is updated to the valid state to lock the atomizer and prevent the atomizer from being used. When the updated current inhalation parameter does not reach the default inhalation parameter, it indicates that the inhalation time or the number of inhalations of the atomizer has not been used up, the battery rod enters the sleeping time, and when the airflow is detected next time, power is continued to be supplied to the atomizer to heat the heating element L.

If the scrap parameter of the atomizer is updated to the valid state, the driving control circuit 13 controls the control switch M to be always in the off state, so as to prohibit the use of the atomizer into which the user injects oil without permission.

FIG. 15 is a schematic diagram of functional modules of a second embodiment of a battery rod according to the present disclosure. The battery rod includes a driving chip 300, and the driving chip 300 is provided with a detection communication portion D. When the atomizer is inserted into the battery rod, the detection communication portion D communicates with the atomizer inserted into the battery rod, and reads a scrap parameter in the atomizer to determine, according to the scrap parameter, whether the atomizer is able to be used.

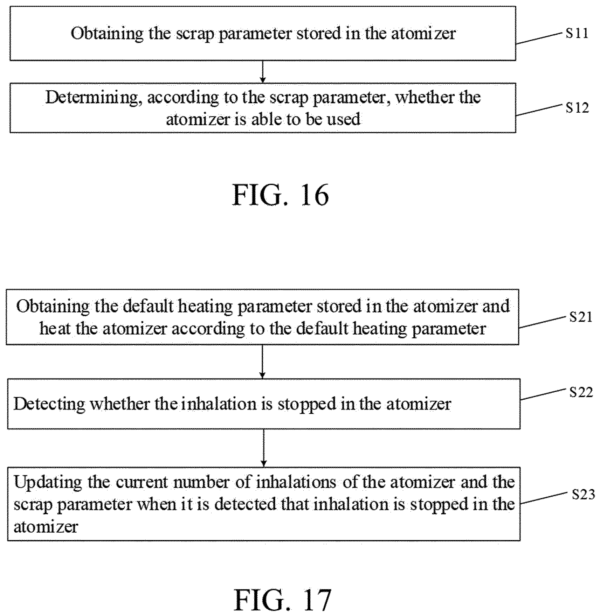

FIG. 16 is a schematic flowchart of a method of using an electronic atomization device according to an embodiment in the present disclosure. The electronic atomization device includes the atomizer in FIG. 14 and the battery rod in FIG. 15, and the method specifically includes the following operations.

Step S11: Obtaining the scrap parameter stored in the atomizer.

The memory 14 is arranged in the atomizer, and the memory 14 stores the scrap parameter. When the atomizer is inserted into the battery rod, the battery rod performs communication authentication with the communication interface SDA of the atomizer through the detection communication portion D. If the authentication is successful, the battery rod reads the scrap parameter. The battery rod further includes an identification circuit 50, and the detection communication portion D communicates with the atomizer through the identification circuit 50.

Step S12: Determining, according to the scrap parameter, whether the atomizer is able to be used.

When the read scrap parameter is invalid, it indicates that the atomizer is able to be used, and when the read scrap parameter is valid, it indicates that the atomizer is not able to be used.

As illustrated in FIG. 17, the method further includes the following operation.

Step S21: Obtaining the default heating parameter stored in the atomizer and heat the atomizer according to the default heating parameter.

When the read scrap parameter is invalid, it indicates that the atomizer is able to be used, and the battery rod obtains the default heating parameter stored in the memory 14 of the atomizer and heats the atomizer according to the default heating parameter. In a specific embodiment, the default inhalation parameter, for example, may be the longest inhalation time or the maximum number of inhalations after the oil injection into the atomizer. The default heating parameter, for example, may be a corresponding heating power or a heating temperature curve.

The battery rod further includes a drive circuit 40, and the drive circuit 40 is connected to the driving chip 300 and the identification circuit 50. When the read scrap parameter is indicated as invalid, the battery rod obtains the default heating parameter stored in the atomizer, and the heating element L of the atomizer is heated through the drive circuit 40 according to the default heating parameter, such that the atomizer is able to be used normally.

In a specific embodiment, the driving chip 300 is the driving chip 100 shown in FIG. 9, the detection communication portion D of the driving chip 300 is the first detection communication portion P1 or the second detection communication portion P1' of the driving chip 100, the identification circuit 50 is the first identification module 11 or the second identification module 12 shown in FIG. 9, and the drive circuit 40 is the first drive module 31 or the second drive module 32 shown in FIG. 9. The circuit connection of the detection communication portion D, the identification circuit 50, the drive circuit 40, and the driving chip 300 is the same as the circuit connection of the first detection communication portion P1, the first identification module 11, the first drive module 31, and the driving chip 100 shown in FIG. 9 or the circuit connection of the second detection communication portion P1', the second identification module 12, the second drive module 32, and the driving chip 100.

It may be understood that, in other embodiments, the electronic atomization device may also include the battery rod shown in FIG. 9. In this case, before step S11, the method further includes the step: Identifying whether the atomizer is forwardly or reversely inserted and select the corresponding detection communication portion, drive module, and identification module. It may be understood that, in other embodiments, the electronic atomization device may also include the battery rod shown in FIG. 11, and its specific operating process is similar, which will not be repeated here.

Step S22: Detecting whether the inhalation is stopped in the atomizer

A microphone or an airflow sensor is arranged in the battery rod. When the microphone or the airflow sensor detects a passing of an airflow, the battery rod is awakened from a sleep state and transmits a conduction signal to the atomizer. After the atomizer receives a conduction instruction, the driving control circuit 13 controls the control switch M to be turned on, and then the battery rod obtains the default heating parameter to heat the heating element L, such that the atomizer is able to be used normally. When the microphone or the airflow sensor detects no passing of an airflow, inhalation is stopped in the atomizer.

Step S23: Updating the current number of inhalations of the atomizer and the scrap parameter when it is detected that inhalation is stopped in the atomizer.

When the microphone or the airflow sensor detects no passing of an airflow, inhalation is stopped in the atomizer, and the battery rod stops heating the heating element L, and updates the current inhalation parameter in the atomizer according to the inhalation time or the number of inhalations during the inhalation process. For example, when it is detected that the user stops sucking the electronic atomization device, the battery rod accumulates the finished inhalation time and the inhalation time in the current inhalation parameter or the number of finished inhalations and the number of inhalations in the current inhalation parameter, and the current inhalation parameter is updated according to the accumulated result.

Optionally, after updating the current inhalation parameter, the updated current inhalation parameter is compared with the default inhalation time, and when the updated current inhalation parameter reaches the default inhalation parameter, it indicates that the inhalation time or the number of inhalations of the atomizer has been used up. In this case, the scrap parameter in the atomizer is updated to the valid state to lock the atomizer and prevent the atomizer from being used. When the updated current inhalation parameter does not reach the default inhalation parameter, it indicates that the inhalation time or the number of inhalations of the atomizer has not been used up, the battery rod enters the sleeping time, and when the airflow is detected next time, power is continued to be supplied to the atomizer to heat the heating element L.

If the scrap parameter of the atomizer is updated to the valid state, the driving control circuit 13 controls the control switch M to be always in the off state, so as to prohibit the use of the atomizer into which the user injects oil without permission.

The present disclosure provides an electronic atomization device, a chip is arranged in an atomizer, and the atomizer is able to communicate with a battery rod through a communication interface arranged on the chip. When the battery rod communicates with the atomizer, the atomizer operates in a first mode; and when the battery rod does not communicate with the atomizer, the atomizer operates in a second mode. When the battery rod communicates with the atomizer, it indicates that the battery rod and the atomizer are products from the same manufacturer; and if the battery rod does not communicate with the atomizer, it indicates that the battery rod and the atomizer are not products from the same manufacturer. Through the method of the present disclosure, the battery rod and the atomizer of the same model or different models operate in different modes, so as to meet the requirements for use in different circumstances.

In the electronic atomization device provided in the present disclosure, a driving chip and a drive identification circuit are arranged in the battery rod, and the drive identification circuit is connected to the driving chip. When the atomizer is inserted into the battery rod, the driving chip determines whether the atomizer is inserted forwardly or reversely through the drive identification circuit and controls the drive identification circuit to operate in a forward insertion mode or a reverse insertion mode. Therefore, the battery rod and the atomizer are enabled to operate normally in both the forward insertion mode and the reverse insertion mode.

The electronic atomization device in the present disclosure is also able to prevent the use of the atomizer into which the user injects oil without permission.

The foregoing descriptions are merely implementations of the present disclosure but are not intended to limit the patent scope of the present disclosure. Any equivalent structural or equivalent process change made by using the content of the specification and the accompanying drawings of the present disclosure for direct or indirect use in other relevant technical fields shall fall within the patent protection scope of the present disclosure.

## Claims

1. A chip configured for an atomizer, comprising:
a package, wherein the package is provided with a communication interface, and when the atomizer is inserted into a battery rod, the communication interface is configured to determine whether the battery rod is able to communicate with the atomizer;
when the battery rod communicates with the atomizer, the atomizer operates in a first mode; and when the battery rod does not communicate with the atomizer, the atomizer operates in a second mode.

2. The chip according to claim 1, further comprising:
a control switch, arranged in the package; and
a driving control circuit, arranged in the package, wherein the control end of the driving control circuit is connected to the control end of the control switch, and the communication end of the driving control circuit is connected to the communication interface, to determine whether the battery rod is able to communicate with the atomizer through the communication interface.

3. The chip according to claim 2, wherein the package further comprises a switch channel interface, a ground interface, and a power supply interface, wherein the switch channel interface is connected to the first channel end of the control switch; the ground interface is connected to the second channel end of the control switch and the ground end of the driving control circuit; and the power supply interface is connected to the power supply end of the driving control circuit and connected to the communication interface.

4. The chip according to claim 3, wherein the package further comprises a switch control interface and/or an expansion interface, wherein the switch control interface is further connected to the control end of the control switch, and the expansion interface serves as a reserved interface of the chip.

5. The chip according to claim 3, further comprising:
a diode, arranged in the package, wherein the communication interface is connected to the power supply interface through the diode.

6. The chip according to claim 3, further comprising:
a resistor, arranged in the package, wherein the communication interface is connected to the ground interface through the resistor.

7. The chip according to claim 3, wherein the driving control circuit comprises a memory and the memory stores preset data, when the atomizer is inserted into the battery rod and the battery rod does not communicate with the atomizer within a predetermined time interval, the driving control circuit controls the control switch according to the preset data, to enable the atomizer to operate in the second mode.

8. An atomizer, comprising:
a heating element; and
a chip, connected to the heating element, wherein the chip is the chip according to any one of claims 1 to 7; and
wherein after the atomizer is inserted into the battery rod and the battery rod is communicating with the atomizer, the chip controls the heating element to enable the atomizer to operate in the first mode, and when the battery rod does not communicate with the atomizer, the chip controls the heating element to enable the atomizer to operate in the second mode.

9. The atomizer according to claim 8, further comprising:
a first input end and a second input end, wherein when the atomizer is inserted into the battery rod, the atomizer is electrically connected to the battery rod through the first input end and the second input end, the heating element and the control switch of the chip are connected in series between the first input end and the second input end, and the communication interface of the package is connected to the first input end; and
a capacitor, wherein the power supply interface of the package is grounded through the capacitor.

10. The atomizer according to claim 9, further comprising:
a first switch, wherein the control end of the first switch is connected to the switch control interface, the first channel end of the first switch is connected to the switch channel interface, and the second channel end of the first switch is connected to the ground interface, to enable that the first switch is connected in parallel to the control switch.

11. The atomizer according to claim 9, further comprising:
a second switch, wherein the control end of the second switch is connected to the switch control interface, the first channel end of the second switch is connected to the ground interface, and the second channel end of the second switch is connected to the second input end, to enable that the heating element, the control switch, and the second switch are connected in series between the first input end and the second input end in sequence.

12. The atomizer according to claim 8, further comprising:
a first input end and a second input end, wherein when the atomizer is inserted into the battery rod, the atomizer is electrically connected to the battery rod through the first input end and the second input end, an end of the heating element is connected to the first input end, the switch channel interface of the package is connected to the first input end, and another end of the heating element is connected to the ground interface of the package, to enable that the heating element and the control switch of the chip are respectively connected in parallel between the first input end and the second input end; and the communication interface of the package is connected to the first input end; and
a capacitor, wherein the power supply interface of the package is grounded through the capacitor.

13. An electronic atomization device, comprising:
an atomizer, wherein the atomizer is the atomizer according to any one of claims 8 to 12; and
a battery rod, configured to supply power to the atomizer.
